# NEW EUROPEAN PATENT SPECIFICATION

(11) **EP 1 389 914 B2**
(45) Date of publication and mention of the opposition decision: **04.08.2010**
(45) Mention of the grant of the patent: 20.09.2006
(21) Application number: 01935189.9
(22) Date of filing: 07.05.2001
(51) Int. Cl.: A23C 3/02, A23C 9/15, A23C 3/037, A23C 1/12

(54) **ULTRA-HIGH TEMPERATURE MILK CONCENTRATE PACKAGE AND METHOD OF PRODUCING SAME**
UHT-MILCHKONZENTRATSPACKUNG UND VERFAHREN ZU IHRER HERSTELLUNG
CONDITIONNEMENT DE LAIT CONCENTRE PASTEURISE A ULTRA-HAUTE TEMPERATURE ET PROCEDE DE PRODUCTION DE CE DERNIER

(43) Date of publication of application: 25.02.2004
(73) Proprietor: Moo Technologies, LLC, Batavia OH 45103-1796 (US)
(72) Inventor: REAVES, Ronald, A., Cincinnati, OH 45103 (US); HOWARD, Ronnie, L., Springboro, OH 45066 (US)
(74) Representative: Findlay, Alice Rosemary
(86) International application number: PCT/US2001/014927
(87) International publication number: WO 2002/089591

(56) References cited:
- WO-A-00/64267
- US-A- 2 490 599
- US-A- 2 663 642
- US-A- 2 822 277
- US-A- 2 845 350
- US-A- 2 860 057
- US-A- 3 018 185
- US-A- 3 052 555
- US-A- 3 119 702
- US-A- 3 666 497
- US-A- 4 921 717
- US-A- 5 229 159
- US-A- 5 738 248
- US-A- 6 149 035
- D. D. MUIR JOURNAL OF THE SOCIETY OF DAIRY TECHNOLOGY vol. 37, no. 4, October 1984, pages 135 - 140

## Description

### Field of the Invention

This invention relates to the ultra-high temperature (UHT) pasteurization of condensed milk. More particularly, the invention relates to packaging concentrated milk for dispensing reconstituted milk from currently available juice dispensing equipment and for transporting large amounts of ultrapasteurized (UP) liquid milk concentrate worldwide.

### Background of the Invention

The cost of transporting and storing fresh milk is significant because of its short shelf life and weight. And because fresh milk is used extensively by America's military and is one of its largest export commodities, there is a long-felt need for a milk concentrate that has a longer shelf life and a product package with a lesser weight for transportation and storage and when reconstituted provides the same physical and taste characteristics of fresh milk.

The prior art addresses various aspects of the UHT pasteurization of milk, the production of condensed milk products, and the reconstituting of concentrated liquid beverages. No known prior art, however, discloses an ultrapasteurized liquid milk concentrate packaged for dispensing a reconstituted milk beverage in existing beverage dispensers or for transporting large amounts of UHT pasteurized milk concentrate worldwide to provide a reconstituted milk at the destination that has the same physical characteristics of and tastes like fresh milk.

U.S. Patent 2,860,057 discloses a known preparation of a sterilized evaporated or condensed milk having a final desired concentration of from about 16% to 35% total solids compared to the standard concentration of about 8.0-8.5% total solids. The different processes each involve forewarming and pasteurizing steps including high-temperature-short-term sterilization after the milk is first concentrated by conventional means. The disclosed processing avoids age thickening or gelation of the milk during high-temperature sterilization effected either before or after packaging in a can. If an aseptic canning method is used, the sterilized concentrate is subsequently homogenized under sterile conditions. Reconstitution involves a complicated dilution, mixing, and color comparison procedure with disclosed mixing volume ratio of water to evaporated milk of 1:1.

U.S. Patent 4,921,717 describes a process for producing UHT sterilized concentrated milk including first sterilizing a partially concentrated milk product and then effecting further concentration of the milk product under sterile conditions. The processing teaches away from using stabilizers in the disclosed milk concentrate made from whole or skimmed cow's milk. Although the concentrated milk may be diluted for use in place of fresh milk, applicants' efforts to produce a reconstituted milk beverage that tastes like fresh milk from UHT sterilized concentrated milk having no stabilizers have proven fruitless. And this is particularly true when using beverage dispensers to effect the reconstituting process. The patent generally describes diluting sterilized concentrated milk for use in place of fresh milk but discloses no particulars how that is allegedly done.

U.S. Patent 4,842,884 describes a formulated milk concentrate made with a mixture of nonfat dry milk solids, water, edible oil and sugar. The concentrate can either be frozen for later use or immediately blended with water to produce a beverage. Once reconstituted, it may be stored for up to about 5 days. Nothing disclosed in this patent enables anyone to form a milk concentrate that may be stored in its liquid state at least 60 days and for more than 90 days and be reconstituted using known juice dispensing equipment.

U.S. Patents 2,570,231; 3,108,875; 4,362,756; and 5,766,666 respectively disclose a sweetened condensed skim milk, condensed cream, condensed milk having at least 8% milk fat, and a reduced fat and/or fat-free condensed milk each processed differently to produce a novel sweetened condensed dairy product in each instance. The condensed cream is used for a source of fat in ice cream. And the other three condensed milk products are used in the baking and confectionery industries and by retail consumers to produce baked goods. U.S. Patent 4,091,118 describes a vegetable-based sweetened condensed milk used as a coffee creamer. None of these patents, however, discloses a condensed liquid milk product for providing a reconstituted beverage that tastes like fresh milk.

U.S. Patent 2,565,085 discloses the customary forewarming of whole milk to destroy bacteria, molds, yeasts, and the like. The forewarming also helps to maintain the texture of the milk product. Such forewarming of the milk is usually effected at a temperature in the range of 145° F. to 175° F. Yet this patent replaces the forewarming practice with an ultra-high temperature treatment of the milk before evaporation to produce a milk concentrate, which is not intended for producing a reconstituted beverage from a beverage dispenser or for a package containing up to 300 gallons of ultrapasteurized milk concentrate.

U.S. Patent 5,260,079 describes a method of and equipment for controlling the content of fat in milk using specified process parameters for mixing skim milk with cream. And U.S. Patents 5,223,299 and 5,229,159 disclose sterilizing milk without stabilizers and a packaged resultant milk concentrate product for use as coffee creamers.

Finally, U.S. Patent 4,282,262 discloses a milk blend fraction used as an ingredient component for a two-packet frozen dessert. The milk blend includes sodium hexametaphosphate and carrageenan used together as stabilizers. Nothing in this patent, however, relates to the production of UHT sterilized condensed milk packaged for use with a beverage dispenser in which the milk concentrate may be reconstituted as a milk beverage that has the characteristics of fresh milk. The known stabilizing materials therefore are not related to the functions required in producing the UHT pasteurized milk concentrate of this invention.

### Purpose of the Invention

A primary purpose of this invention is to provide a package of an ultrapasteurized concentrated milk product that weighs 3 to 4 times less than the amount of reconstituted milk that is produced therefrom, tastes like regular fresh milk, and has a shelf life of at least 60 and more than 90 days.

Another object of the invention is to provide a packaged concentrated milk product for use in currently available dispensing machines used for reconstituting and dispensing juices.

A further object is to provide a concentrated liquid milk product package that produces substantial cost savings for export, military uses such as for naval ships and submarines, and for commercial and government food service programs.

Still another object of the invention is to provide milk concentrate packages in standard retail pint and quart packages for the general population that yield 1/2 gallon for the pint and one gallon for the quart when reconstituted.

A still further object of the invention is to provide a milk concentrate that is enriched with vitamins and other nutritive ingredients that addresses special dietetic needs of special groups with dietary restrictions.

Another object is to provide an UHT pasteurized liquid milk concentrate packaged in an amount of up to 300 gallons while gaining shelf-life and economic benefits heretofore unknown in the dairy industry and enabling the on-site destination reconstituting of the concentrate using existing dispensing equipment and otherwise using uncomplicated, simple water to milk concentrate mixing techniques in water to concentrate volume ratios in the range of 3:1 to 4:1.

### Summary of the Invention

The invention is defined in Claims 1, 10, 15, 17 and 19.

The ultrapasteurized milk concentrate package of the invention includes up to 300 gallons of ultrapasteurized liquid milk concentrate. In one embodiment, the package comprises container means including a preselected amount of the ultrapasteurized liquid milk concentrate and has a structural configuration effective for use with dispensing means which includes means for mixing the ultrapasteurized milk concentrate with water to create a reconstituted milk beverage that tastes like fresh milk. The ultrapasteurized milk concentrate includes a high-solids condensed skim milk (HSCS) in the range of 80% to 90% by weight, a cream content in the range of from 8.5% to 10.5% by weight, and a stabilizer content of less than 1%. The initially pasteurized condensed skim milk has a total milk solids nonfat (MSNF) content in the range of 35.0% to 36.5% by weight, said cream has a milk fat content of from 36.0% to 42.0% and said stabilizer content consists essentially of the stabilizing materials sodium hexametaphosphate in the range of 97.0% to 99.0% and carrageenan (kappa type) in the range of 1.0% to 3.0%. In a specific embodiment, the milk concentrate package has a structural configuration effective for disposition of a liquid dispensing means including discharge nozzle means for mixing said ultrapasteurized concentrate with water to dispense the reconstituted liquid milk beverage.

The method for producing the ultrapasteurized liquid milk concentrate of the invention comprises heating a milk starting product to an elevated pasteurizing temperature under-reduced pressure for an amount of time to sufficient to evaporate liquid from the milk starting product to form a pasteurized, high-solids intermediate liquid milk concentrate. An amount of cream is mixed with the intermediate milk concentrate to form a condensed liquid blend having a preselected amount of fat content to produce the reconstituted milk beverage having the desired taste characteristics.

A final liquid milk concentrate is produced by mixing a sufficient amount of a stabilizer material with a predetermined amount of the condensed liquid blend. The stabilizer material is effective to ensure uniform distribution of and prohibit separation and settling of milk solids in the ultrapasteurized liquid milk concentrate during storage. The stabilizer material is effective to produce a protein complex for forming a stable dispersion of colloidal constituents and to substantially uniformly distribute the colloidal constituents in the final liquid milk concentrate. The stabilizer materials maintain the preselected pH of the final liquid milk concentrate in the range of 6 to 8 during the ultrapasteurizing step. The stabilizer material is further effective for inhibiting thermal coagulation of milk proteins at the preselected pH of the final milk concentrate. The total MSNF content in the final liquid milk concentrate is at least 29.9% by weight of the concentrate to produce a reconstituted milk beverage having a MSNF content of at least 8.25%.

The final liquid milk concentrate is ultrapasteurized to form the ultrapasteurized liquid milk concentrate of the invention. The final homogenizing and packaging of the ultrapasteurized milk concentrate forms the ultrapasteurized liquid milk concentrate package of the invention for subsequent mixing of the ultrapasteurized milk with water to form the reconstituted desired reconstituted milk beverage.

A feature of the invention is directed to a heating step that includes foreheating the initial liquid milk to an elevated foreheating temperature for a selected time period to produce the milk starting product, which is then heated to the elevated pasteurizing temperature that is higher than the foreheating temperature to produce the desired intermediate liquid milk concentrate. When the initial liquid milk is a skim milk, the elevated foreheating temperature is in a range of about 144° F. to about 152° F and the elevated pasteurizing temperature is maintained in the range of 178° F. to 182° F. for a time period in the range from 16-22 seconds to pasteurize the intermediate liquid milk concentrate.

Another feature is directed to the manner of preparing the stabilizer material for mixing with the condensed liquid blend. In a specific embodiment, the stabilizer material is first solubilized in water under high shear conditions and at an elevated temperature to form a stabilizer slurry that is mixed with the condensed liquid blend to form the final liquid milk concentrate. The stabilizer slurry includes sodium hexametaphosphate and carrageenan so that when the slurry is mixed with the condensed liquid blend, the carrageenan forms a protein carrageenate complex with milk protein to provide the stable dispersion of colloidal constituents. The sodium hexametaphosphate is effective to aid in substantially uniformly distributing the colloidal constituents and inhibiting thermal coagulation in the concentrate. The stabilizer slurry includes a stabilizer material content in the range of 14.7% to 12.5% by weight of the stabilizer slurry to produce a stabilizer material content of less than 1.0% by weight of the final liquid milk concentrate. The stabilizer material includes sodium hexametaphosphate in the range of 14.6% to 20.8% of the stabilizer slurry and carrageenan (kappa type) in the range of 0.15% to 0.7% of the stabilizer slurry.

Another feature of the invention is directed to the particular viscosity of the concentrates at different times during the processing. The viscosity of the final liquid milk concentrate is in the range of 300 to 400 centipoises at 40° to 45° F and the viscosity of the ultrapasteurized milk concentrate is in the range of 1,000 to 1,500 centipoises at the same temperature range. The pasteurized intermediate liquid milk concentrate includes a milk solids nonfat content in the range of from 35.0% to 36.5% by weight. The pasteurized intermediate liquid milk concentrate thus includes a MSNF content in an amount of at least 35% to produce a reconstituted low fat milk product upon mixing the ultrapasteurized milk concentrate with water. Moreover, the milk solids nonfat content is no more than 36.5% to preclude bum damage of the final liquid milk concentrate during the ultrapasteurizing step. Water is mixed with the ultrapasteurized milk concentrate to form the reconstituted milk product in a water/concentrate volume ratio of parts of water to parts of ultrapasteurized milk concentrate in the range of about 3:1 to about 4:1.

Another feature of the invention is directed to the composition of the final liquid milk concentrate that includes intermediate high-solids milk concentrate in the range of from about 87% to about 90%, cream in the range of from about 8.5% to about 10.5%, water in the range from about 2.0% to 3.0%, and stabilizer material in the amount of less than 1.0% by weight of the concentrate. The reconstituted milk beverage includes a milk fat content in the range of less than 0.21% to 3.25% and a milk solids nonfat content of at least 8.25% by weight of the milk beverage.

A further feature of the invention is directed to the ultrapasteurizing step that includes heating the final liquid milk concentrate to an elevated ultrapasteurizing temperature for a period of time sufficient to form the ultrapasteurized liquid milk concentrate. A specific embodiment, the ultrapasteurizing step includes heating the final liquid milk concentrate to a temperature in the range of 288° F to 292° F for a period of time sufficient to produce a ultrapasteurized liquid milk concentrate of the invention. More specifically, the ultrapasteurizing heating step includes first heating the final liquid milk concentrate to a first elevated temperature of about 180° F for a period from 30 to 36 seconds and then directing the heated final liquid milk concentrate to a direct steam infusion zone to be heated to 290° F for a period of four seconds.

The homogenizing step comprises homogenizing the ultrapasteurized milk concentrate in the range of 2,400 to 2,600 PSI in a first stage of about 2,000 PSI and a second stage of about 500 PSI. The packaging step feature after homogenizing includes the step of cooling the ultrapasteurized milk concentrate to a temperature of less than 40° F and filling packaging means with the ultrapasteurized milk concentrate for disposition in a liquid beverage dispenser. In this packaging step, the ultra-pasteurized milk concentrate is disposed in a package for use in a beverage dispenser that includes discharge nozzle means for mixing the ultrapasteurized milk concentrate with water to form the desired reconstituted milk beverage. In a further specific embodiment, the packaging step includes disposing up to 300 gallons of the ultrapasteurized milk concentrate in a package container.

In another embodiment of the invention, a preselected amount of liquid skim milk to a temperature in the range of 144° to 152° F for an amount of time sufficient to produce a preheated milk starting product. The preheated milk starting product is then pasteurized in the range of 178° F to 182° F in a time period in the range of 16-22 seconds. The pasteurizing step is effected under a vacuum to evaporate liquid from the milk starting product to produce an intermediate condensed liquid milk including milk solids nonfat in the range of 35.0% to 36.5% by weight. Cream and stabilizing material are mixed with the intermediate condensed liquid milk to produce a final liquid milk concentrate including a cream content in the range of 8.5% to 10.5% by weight thereof and a stabilizing material content of less than 1.0% thereof. The final liquid milk concentrate is then ultrapasteurized and homogenized to form the ultrapasteurized milk concentrate, which is then disposed in the package container for subsequent reconstitution with water at a water/milk concentrate volume ratio in the range from 3:1 to 4:1.

In another feature of the method of the invention, a liquid milk starting product is heated under vacuum to an elevated temperature for an amount of time sufficient to pasteurize the milk starting product and evaporate liquid from the milk starting product to form a pasteurized, high-solids condensed liquid skim milk including milk nonfat solids in the range of 35.0% to 36.5%. An amount of cream is mixed with the pasteurized condensed skim milk to form a condensed liquid blend having an amount of fat content sufficient for the ultrapasteurized liquid milk concentrate to be reconstituted to quality as a low fat milk concentrate. An effective amount of a stabilizer slurry is then mixed with a predetermined amount of condensed liquid blend to form a final skim milk concentrate. The stabilizer slurry contains sodium hexametaphosphate and carrageenan (kappa type) in amounts sufficient to prohibit separation, settling, and crystallization of milk constituents in the final liquid milk concentrate during storage. The final liquid skim milk concentrate is ultrapasteurized, homogenized and packaged to form an ultrapasteurized milk concentrate package for disposing in a liquid dispensing means including discharge nozzle means for mixing the ultrapasteurized milk concentrate with water to dispense a reconstituted low fat milk beverage.

### Detailed Description of the Invention

The ultrapasteurized concentrated milk product of the invention is produced using a series of known process steps with novel controlled conditions to achieve new and unexpected results. The heating and cooling steps of the process of the invention may be effected using conventional apparatus as used in the food and dairy industries. For example, one type of such apparatus used for ultrapasteurization is the direct heating plant in which high pressure potable steam is mixed with the liquid milk product either by injecting the steam into the liquid milk product or vice versa. The water added to the liquid milk product is then removed by evaporation, usually under reduced pressure, which also cools the product. The direct steam infusion apparatus effects a continuous ultrapasteurization process known in the dairy industry.

Indirect heating plants rely on heat exchangers usually in plate or tubular form in which the liquid milk product is heated by contact with one surface of the heat exchangers, the other surface of which is heated by steam or pressurized hot water. Cooling is effected in similar heat exchangers. Some heat may be conserved by recycling the heating/cooling liquid between the heating and cooling steps as appropriate. Indirect plants usually heat the liquid milk product in two or more steps and have a similar number of cooling steps.

In a specific embodiment of the invention, the ultrapasteurized milk concentrate is produced in a series of process steps. First, a high solids condensed skim milk (HSCS) is prepared by pasteurizing under vacuum conditions. HSCS and cream are mixed to form 1,000 gallons in a batch tank of a condensed liquid blend having a preselected fat content. A special stabilizer mixture is mixed with warm water under high shear mixing conditions to form a unique stabilizer slurry which is added to the condensed liquid blend to ensure production of a final liquid milk concentrate that will provide a reconstituted milk beverage having the desired taste and milk characteristics. Vitamin A Palmitate and Vitamin D3 are added to the batch, which is then ultrapasteurized and homogenized. The resultant ultrapasteurized milk concentrate is then held in sterile tanks until packaging in an aseptic filler. The milk concentrate of the invention has a refrigerated shelf-life of at least sixty days. The HSCS milk and cream are sources of milk-derived carbohydrates, proteins, and minerals. In addition, the cream brings the desired milk fat content to the UHT pasteurized milk concentrate of the invention.

The process parameters are controlled to maintain the milk solids nonfat content in the HSCS within a critical range and the novel stabilizer system an ultrapasteurization conditions produce an ultrapasteurized milk concentrate having substantially uniformly distributed milk constituents that do not separate. And for the first time such a milk concentrate can be reconstituted with water within an available juice dispensing system to yield a lowfat reconstituted milk product that has the same characteristics of and tastes like fresh milk. The prior art uses condensed or evaporated milk in the baking industry. But there is no known use for reconstituting a condensed milk for use as a fresh milk beverage available for drinking.

The initial pasteurization process in a specific embodiment of the invention is continuous and treats a skim milk (less than 0.5% fat content) at a flow rate of 3000 gal/hr. The milk is first preheated for 10 minutes +/- 30 seconds at a temperature of about 150° F within a temperature range of 144° F to 152° F. The preheated milk is then pasteurized at about 180° +/-2° F. for 16-22 seconds and held for 10 minutes +/-30 seconds under a vacuum of 23 +/- 0.5 inches of mercury with an air temperature of about 145° F. After pasteurization, the HSCS is directed through a plate cooler for 3 minutes at a flow rate of 800 to 1,000 gal/hr where it is cooled to a temperature of less than 40° F.

Heating the milk under vacuum evaporates liquid and thus produces the desired high solids intermediate condensed skim milk, which includes 35.0 to 36.5% milk solids nonfat (MSNF) by weight as required for further processing. The upper and lower limits are critical. A lower MSNF content will not produce an ultrapasteurized milk concentrate required to produce the novel milk beverage of the invention when reconstituted with water. A higher MSNF will produce excessive viscosity of and "burn-on" in the final liquid milk concentrate as it moves through the ultrapasteurizing equipment. In this specific embodiment, the APV-Crepaco Direct Steam Infusion System is the equipment used to effect ultrapasteurization.

After the initial pasteurization, the intermediate HSCS milk concentrate is mixed with cream having a fat content in the range of from about 36% to 42% to form a condensed liquid blend in a batch tank having a capacity of at least 750 gallons. Stabilizer material is then added to the batch of condensed liquid blend to form a final liquid milk concentrate to be subsequently ultrapasteurized. The stabilizers are first mixed under high shear conditions with warm water having a temperature of 95 +/- 5° F (90° to 100° F). The resultant stabilizer slurry includes a stabilizer content in the range of from 14.75 to 21.5% by weight. In the specific embodiment, the stabilizer content includes the stabilizing materials of sodium hexametaphosphate in the range of 14.6 to 20.8% and carrageenan (kappa type) in the range of 0.15% to 0.7%.

The initial stabilizer mixture composition used in forming the slurry of the invention consists essentially of sodium hexametaphosphate in the range of 97.0-99.0% and carrageenan (kappa type) in the range of 1.0-3.0%. The stabilizer slurry is formed by metering the stabilizer mixture and water into a high shear liquifier blender and mixing it for about 15 minutes to get the stabilizer material into solution. If the stabilizer is not solubilized, it will not be evenly distributed in the slurry and as required in the final ultrapasteurized milk concentrate of the invention. The desired amounts of Vitamins A Palmitate (250 ml) and D3 (100 ml) are added to the stabilizer slurry during the blending step. The slurry mixture is then pumped to the batch tank and intermixed with the condensed liquid blend of HSCS milk and cream. The viscosity of the final liquid milk concentrate before ultrapasteurization is 300 to 400 centipoises at 40° to 45° F.

A direct steam infusion system continuously ultrapasteurizes the final liquid milk concentrate at a flow rate of 50 gal/minutes (3,000 gal/hr). The generator section of a plate heat exchanger heats the milk concentrate to a first elevated temperature of about 180° F for a period of 30 to 36 seconds as it passes through a holding tube. The preheated milk concentrate is then heated to a second elevated temperature of 290° F for 4 seconds by direct steam infusion to effect ultra-high temperature (UHT) pasteurization and produce the ultrapasteurized liquid milk concentrate that is cooled to 175° F. at a vacuum pan.

The UHT pasteurized liquid milk concentrate is then homogenized at 2500 +/-100 PSI in two stages (1st stage 2000 PSI and 2nd stage 500 PSI) in an industry standard homogenizer and then cooled to less than 40° F. as it flows through the regeneration and cooling sections of the plate heat exchanger of the homogenizer. The homogenized UHT pasteurized blend is pumped to a sterile refrigerated tank and held at a temperature of no greater than 45° F. until packaged. The viscosity of the UHT pasteurized concentrate product is 1000 to 1500 centipoises at 40° to 45° F. The composition of this embodiment of the UHT pasteurized concentrate product of the invention comprises HSCS milk (87-90%); cream (8.5-10.5%); stabilizers (less than 1.0%); and water (2.0-3.0%). These amounts of HSCS milk and cream constituents are required to produce the 1% lowfat milk beverage produced when the ultrapasteurized milk concentrate is reconstituted with potable water at a water concentrate volume ratio of 3 parts water to one part concentrate.

Four milk classifications exist in the industry as designated by the government in terms of the percentage of the milk solids fat content as Full Fat (3.25% Fat); Reduced Fat (2.00% Fat); Low fat (1.00% Fat); and Fat Free (Skim) (<.21% Fat). The composition of the final liquid milk concentrate of the invention varies depending on the percentage of fat content desired in the reconstituted milk beverage. The percentage of milk solids, nonfat in each final liquid milk concentrate is at least 29.9% to attain at least 8.25% milk solids nonfat content in the reconstituted milk beverage made with the UHT milk concentrate of the invention. The percentage of stabilizer solids in the milk concentrate of the invention in each instance is less than one percent. The following Table I shows the total solids calculated for the UHT pasteurized milk concentrate of the invention based on the concentrate being reconstituted with water in a water to concentrate volume ratio of 3 parts per water to one part milk concentrate.

**TABLE I**

| | Full Fat | Reduced Fat | Low Fat | Fat Free (Skim) |
|---|---|---|---|---|
| % Fat | 11.77 | 7.24 | 3.62 | <.74 |
| % Milk Solids Not Fat | =/>29.90 | =/>29.90 | =/>29.90 | =/>29.90 |
| % Stabilizer | <.75 | <.75 | <.75 | <.75 |
| | | | | |
| % Total Solids | =/<42.40 | =/<37.89 | =/<33.52 | =/<31.39 |

The following Table II shows the percentage of fat, MSNF, and total solids in reconstituted milk beverages with the characteristics and tastes like any of the four types of fresh milk made by mixing water with the liquid milk concentrate of Table I in a water to concentrate volume ratio of 3:1.

**TABLE II**

| | Full Fat | Reduced Fat | Low fat | Fat Free (Skim) |
|---|---|---|---|---|
| % Fat | 3.25 | 2 | 1 | <.21 |
| % Milk Solids Not Fat | =/>8.25 | =/>8.25 | =/>8.25 | =/>8.25 |
| % Stabilizer | <.21 | <.21 | <.21 | <.21 |
| | | | | |
| % Total Solids | =/>11.71 | =/>10.46 | =/>9.46 | =>8.67 |

A beverage dispenser manufactured by Wilshire bearing the trademark QUANTUM 4000 operates with a plastic bag package containing the liquid milk concentrate of the invention. A peristaltic pump draws the concentrate from the package and discharges it through a dispensing nozzle to mix it with water flowing at a rate effective to reconstitute the concentrate at a mixing ratio of parts of water to parts of concentrate in a volume ratio range of from about 3:1 to about 4:1. The reconstituted milk beverage has the characteristics of and tastes like fresh milk.

In another specific embodiment, the concentrated milk is loaded into a 300 gallon tri-wall aseptic bag-in-box using an INTASEPT bulk bag-in-box filler. The bag-in-box has a dual layer membrane on the exit port that allows the bag-in-box to connect to a steam sterilized connector that pierces the exit port on the aseptic 300 gallons in the box. This allows the concentrated milk to retain its aseptic atmosphere when penetrated by the sterile connector. The concentrated sterile milk is then unloaded into a sterile blending tank that holds a combination of 2,000 gallons of both sterile water and concentrated milk. The sterile concentrated milk and water are mixed together in the blending tank at the proper mix ratio to reconstitute the milk to regular strength milk. The milk is still in a sterile atmosphere. The regular strength milk is then pumped into a sterile surge holding tank until being pumped to a dairy packaging machine where the product still remains in a sterile atmosphere. It is then packaged in paper milk cartons.

The 300 gallon bag-in-box has a 90 day shelf life from the date of manufacturing. The paper retail package would have the remaining shelf life of the 90 days minus the time from date of manufacturing to the date the 300 gallon bag-in-box is processed for retail packaging. Since the concentrated aseptic milk has remained in a USDA approved aseptic system, the product does not have to be re-pasteurized. As a new and unexpected result, this system allows for a dairy to be established anywhere in the world that local laws permit at a minimum expenditure compared to regular dairies. addition.cip

It is commonly thought in the dairy industry that ultra-high temperature (UHT) pasteurized milk often contains a "scorched" or "burnt" milk taste as a result of the extremely high temperature to which the milk is heated in the UHT process. Milk is an extremely heat-sensitive product so that when using the indirect heating UHT treatment of regular milk, it has a "scorched" milk flavor and does not taste like fresh milk. Logically, the problem of "scorching" should increase as the solids level in milk increases because there is less water to protect the milk proteins from scorching. Thus, a common belief in the dairy trade is that a milk concentrate having a 3 to 4 times greater concentration level of milk solids than regular milk would have a comparably greater scorched flavor than a single strength UHT milk. So it has been assumed that it would not be possible for a concentrated UHT milk to have a fresh milk taste upon being reconstituted. The disclosed invention has produced surprising results to the contrary.

Condensed or concentrated milk with its high milk solids content has a natural tendency to separate and turn to gel due to the extreme weight of those solids. This problem becomes more pronounced as the product ages. So before this invention, trying to attain a shelf life of 4-6 months seemed unrealistic based on prior experience. Furthermore, many in the industry believed that the product would never be able to maintain any of its stability at such high milk solids levels once it had been subjected to the high temperatures under an UHT treatment. Yet the extended shelf life achieved with the product of this invention has unexpectedly proven both of these previous problems associated with a high milk solids content to be nonexistent.

Finally, the idea of reconstituting concentrated milk with water through a modified juice dispensing machine has never been done before. Once the concentrated milk of the invention was reconstituted with water at the dairies in which the product of this invention was developed, plant managers and workers could not believe its "fresh" milk taste and its stable product consistency and texture. Their surprise was compounded by the fact that the product could be dispensed through a machine.

Another embodiment of a process to produce an aseptic, shelf stable UHT milk concentrate of the invention starts with a liquid milk concentrate having a nonfat milk solids content in the range of from about 29.5% to about 42% by weight with an optimum content range of about 39% to 40% by weight to ultimately produce a reconstituted milk beverage by mixing 3.5 parts water to one part of the UHT milk concentrate. The industry-wide fat content classification of the different types of milk is from less than .21% up to 3.25% by weight of butterfat thus including fat free (<.21% fat content) milk, low fat (1% fat content) skim, reduced fat (2% fat content) milk and full fat (3.25% fat content) milk. So depending on the particular classification desired in the reconstituted milk beverage of the invention, a sufficient amount of cream may be mixed with the starting liquid milk concentrate to provide a condensed liquid milk blend having a sufficient amount of fat content effective to form a reconstituted milk beverage having a fat content of from less than .21% up to 3.25% by weight of the reconstituted milk beverage when the ultrapasteurized liquid milk concentrate is reconstituted with water. If no fat is desired to make a no fat product, no cream or fat is needed in the mixture.

A stabilizer is then first prepared for adding to the liquid milk concentrate to form the condensed liquid milk blend that is to be ultrapasteurized. In this embodiment, one (1) pound of stabilizer consisting of sodium hexametaphosphate and carrageenan (kappa type) is mixed with two (2) pounds of warm water (70° F. minimum). The resultant mixture is then blended together in a high shear blender for 10 minutes to form..a stabilizer slurry, which is then mixed with the initial liquid milk concentrate for at least 20 minutes to produce the condensed liquid milk blend that is to be UHT pasteurized. The stabilizer is about 0.7% of the total weight of the condensed liquid milk blend that includes cream.

The resultant condensed liquid milk blend is then continuously run through a Tetra Pak VTIS direct steam injection UHT pasteurization system that uses a prewarming step and then heats the milk to a temperature range of from 288° F. to 294° F. for 2.5 to 5 seconds. In this embodiment, the ultrapasteurizing temperature is 294° F. The UHT milk concentrate is then sent to a cooling condenser, which cools the concentrate to a temperature of from about 80° F. to 90° F. within 2 to 5 seconds. The UHT milk concentrate is then run through a high-pressure homogenizer at 3500 to 5000 psi and sent to an aseptic bag filler machine that sterilizes the bag with steam before it is filled with the sterilized UHT milk concentrate. The final product is checked for proper milk solids and fat content as well as the proper pH level. The milk concentrate includes a total milk solids content of from about 40% to about 46% by weight when it is running through the direct steam injection system, homogenizer, and cooling condenser.

## Claims

1. An ultra-high temperature pasteurised liquid (UHT) milk concentrate for mixing with water to provide a reconstituted milk beverage that tastes like fresh milk comprising an ultra-high temperature pasteurised liquid (UHT) milk concentrate which is produced by directly injecting steam into a condensed liquid milk blend, said concentrate having a nonfat milk solids of at least 29.9% by weight and a stabilizer content of less than 1% by weight, the stabilizer content comprising sodium hexametaphosphate stabilizer in the range of 97 to 99% and carrageenan stabilizer in the range of 1% to 3%, wherein the stabilizer amounts are effective to provide:
(a) an extended shelf stability of at least 60 days without separation of the milk solids
(b) milk solids which do not separate upon dilution with water, and
(c) upon dilution with water provides a drinkable product which has the characteristics of and tastes like regular fresh milk
and wherein the stabilizer content is prepared by solubilizing the sodium hexametaphosphate and carrageenan stabilizers in water under high shear conditions.

2. The UHT milk concentrate of claim 1 which is diluted with water at a ratio of 3:1 to 4:1 of water to concentrate.

3. The UHT milk concentrate of any preceding claim wherein said stability is achieved by aseptic packaging of said concentrate for storage.

4. The UHT milk concentrate of claim 3 wherein said stability is for a term of more than 90 days.

5. The UHT milk concentrate of any preceding claim having a pH in the range of 6 to 8.

6. The UHT milk concentrate of any preceding claim wherein said nonfat milk solids (MSNF) content is from 35% to 46% by weight.

7. The UHT milk concentrate of any preceding claim wherein said nonfat milk solids (MSNF) content is in an amount to produce a drinkable product having an MSNF of at least 8.25% by weight.

8. The UHT milk concentrate of any preceding claim wherein said nonfat milk solids (MSNF) content is from 35% to 45% by weight and said concentrate has a milk fat content of less than 0.74% to 11.77% by weight.

9. The UHT milk concentrate of any preceding claim wherein said UHT milk concentrate includes a condensed skim milk having nonfat milk solids of 35% to 45% by weight, said skim milk in the range of 87% to 90% by weight, and a cream content in the range of up to 8.5% to 10.5% by weight.

10. A package of an ultra-high temperature pasteurized liquid (UHT) milk concentrate for mixing with water to provide a reconstituted milk beverage that tastes like fresh milk comprising a container containing an ultra-high temperature pasteurized liquid (UHT) milk concentrate as claimed in any preceding claim, said container for delivering the UHT milk concentrate for mixing with water to form the drinkable product.

11. The package of claim 10 wherein said milk concentrate container has a structural configuration effective for disposition in a liquid dispenser including a discharge nozzle for mixing said ultrapasteurized milk concentrate with water to dispense said reconstituted liquid milk beverage.

12. The package as defined in claim 10 wherein said container has a structural configuration effective for use with a dispenser which includes a mixer for mixing said ultrapasteurized milk concentrate with water to form a reconstituted liquid milk beverage that tastes like fresh milk.

13. The package of any one of claims 10 to 12 wherein said container for said UHT milk concentrate has a capacity of up to 300 gallons (1135.62 l) for storage and shipping.

14. The package of any one of claims 10 to 12 wherein the capacity of said container ranges from a pint (0.473 l) to a quart (1.137 l) for dilution with water at volume ratios of 3:1 to 4:1 to provide the drinkable product.

15. An aseptic package of an ultra-high temperature pasteurized liquid (UHT) milk concentrate for mixing with water to provide a reconstituted milk beverage that tastes like fresh milk comprising a container containing under aseptic conditions an ultra-high temperature pasteurized liquid (UHT) milk concentrate as claimed in any one of claims 1 to 9, said container for delivering the UHT milk concentrate for mixing with water to form the drinkable product.

16. The aseptic package of the UHT milk concentrate of claim 15 having a nozzle configured to dispense the UHT milk concentrate with water at a ratio of 3:1 to 4:1 of water to concentrate.

17. A beverage dispenser for delivery of an ultra-high temperature pasteurized liquid (UHT) milk concentrate and mixing with water to provide a reconstituted milk beverage that tastes like fresh milk comprising a container containing an ultra-high temperature pasteurized liquid (UHT) milk concentrate as claimed in any one of claims 1 to 9, said container for delivering the UHT milk concentrate for mixing with water, and a dispenser having a source of water and a mixer for mixing the water with the UHT milk concentrate from said container to form and deliver the drinkable product which has the characteristics of and tastes like regular fresh milk.

18. The beverage dispenser of claim 17 wherein said mixer is configured to dispense the UHT milk concentrate with water at a ratio of 3:1 to 4:1 of water to concentrate.

19. A method for producing an ultra-high temperature pasteurized liquid (UHT) milk concentrate for mixing with water to provide a reconstituted milk beverage that tastes like fresh milk comprising providing a condensed liquid milk blend containing sodium hexametaphosphate and carrageenan stabilizers and a pasteurized liquid milk concentrate having an amount of nonfat milk solids sufficient to produce the UHT milk concentrate having a nonfat milk solids content of at least 29.9% by weight when said UHT milk concentrate is reconstituted with water, said stabilizers being present in effective amounts to form a stable dispersion of said milk solids, and directing a continuous flow of said stabilized condensed liquid milk blend into direct contact with steam by injecting steam directly into said flow of condensed liquid milk blend at an effective ultra-high pasteurizing temperature for a time sufficient to form said UHT milk concentrate having a nonfat milk solids content of at least 29.9% by weight with
(a) an extended shelf stability of at least 60 days without separation of the milk solids,
(b) milk solids which do not separate upon dilution with water, and
(c) upon dilution provides a drinkable product which tastes like fresh milk.
wherein the step of providing a condensed liquid milk blend comprises:
heating a liquid milk starting product under vacuum to an elevated temperature for an amount of time sufficient to pasteurise the milk starting product and evaporate liquid from the milk starting product to form a pasteurised liquid milk concentrate;
preparing a stabiliser slurry by solubilizing sodium hexametaphosphate and carrageenan stabilizers in water under high shear conditions, wherein said stabilizers are in an amount sufficient to produce said UHT milk concentrate having a stabilizer content of less than 1 % by weight, the stabilizer content comprising sodium hexametaphosphate stabilizer in the range of 97 to 99% and carrageenan stabilizer in the range of 1 to 3%; and
mixing the stabilizer slurry with the pasteurised liquid milk concentrate.

20. The method of claim 19 wherein the step of providing a condensed liquid milk blend comprises providing a pasteurized liquid milk concentrate having an amount of nonfat milk solids sufficient to produce said UHT milk concentrate having a nonfat milk solids content of at least 29.9% by weight when said UHT milk concentrate is reconstituted with water, mixing a sufficient amount of cream with said pasteurized liquid milk concentrate to provide a condensed liquid blend having a sufficient amount of fat content effective to form a reconstituted milk beverage having a fat content of from less than 0.21% up to 3.25% by weight of said milk beverage when said UHT milk concentrate is reconstituted with water, and mixing an effective amount of stabilizers with said condensed liquid blend to form a stable dispersion of said milk solids and fat in said condensed liquid blend.

21. The method of either claim 19 or claim 20 wherein said continuous flow directing step includes heating said condensed liquid milk blend in direct contact with said injected steam at a temperature in the range of 288°F (142.22°C) to 294°F (145.56°C) for a period of time sufficient to produce said UHT milk concentrate.

22. The method of either claim 19 or claim 20 wherein said continuous flow directing step includes first heating said condensed liquid milk blend to a first temperature of 180°F (82.22°C) for a period of from 30 to 36 seconds, and then directing the heated condensed liquid milk blend into direct contact with said injected steam at a temperature of 290°F (143.33°C) to 294°F (145.56°C) for a period of 2 to 5 seconds to form said UHT milk concentrate.

23. The method of any one of claims 19 to 22 wherein the viscosity of the condensed liquid milk blend is in the range of 300 to 400 centipoises (3-4 Pa) at 40° to 45°F (4.44 to 7.22°C), and the viscosity of the UHT milk concentrate is in the range of 1000 to 1500 centipoises (10 to 15 Pa) at 40° to 45°F (4.44 to 7.22°C).

24. The method of any one of claims 20 to 23 wherein said stabilizers are effective to maintain a preselected pH of said condensed liquid milk blend in the range of 6 to 8.

25. The method of any one of claims 19 to 24 further including the steps of homogenizing said UHT milk concentrate, and then packaging said homogenized UHT milk concentrate for subsequent mixing with water to form said reconstituted milk beverage.

26. The method of claim 25 wherein said packaging step includes the step of cooling said UHT milk concentrate and disposing said UHT milk concentrate in a liquid beverage dispenser with package filling means.

27. The method of claim 25 wherein said packaging step includes disposing said UHT milk concentrate in a package having a discharge nozzle for mixing said UHT milk concentrate with water to form said reconstituted milk beverage.

28. The method of claim 25 wherein said packaging step includes the step of cooling said UHT milk concentrate to a temperature of 80°F (26.67°C) to 90°F (32.22°C) and disposing said milk concentrate in an aseptic container.

29. The method of claim 25 wherein said packaging step includes disposing up to 300 gallons (1135.62 I) of said UHT milk concentrate in an aseptic container.

30. The method of claim 25 wherein said packaging step includes disposing said UHT milk concentrate in a container for subsequent reconstitution with water at a water to milk concentrate mixing volume ratio in the range of 3:1 to 4:1.

31. The method of any one of claims 19 to 30 wherein said condensed liquid milk blend includes a sufficient amount of cream to provide a sufficient amount of fat content effective to form a reconstituted milk beverage having a fat content of from less then 0.21% up to 3.25% by weight of said milk beverage when said UHT milk concentrate is reconstituted with water.

32. The method of any one of claims 19 to 31 wherein said pasteurized liquid milk concentrate includes a nonfat milk solids content in an amount of at least 35% to 46% by weight.

33. The method of any one of claims 19 to 31 wherein said reconstituted milk beverage includes a milk fat content in the range of from less than 0.21% to 3.25% by weight and a nonfat milk solids content of at least 8.25% by weight.

## Patentansprüche

1. Ultrahocherhitztes, pasteurisiertes, flüssiges (UHT)-Milchkonzentrat zum Mischen mit Wasser, um ein rekonstituiertes Milchgetränk bereitzustellen, das wie frische Milch schmeckt, umfassend ein ultrahocherhitztes pasteurisiertes, flüssiges (UHT)-Milchkonzentrat, das durch direktes Injizieren von Dampf in ein kondensiertes, flüssiges Milchgemisch produziert wird, wobei das genannte Konzentrat einen Gehalt an fettfreien Milchfeststoffen von wenigstens 29,9 Gew.-% und einen Stabilisatorgehalt von weniger als 1 Gew.-% hat, wobei der Stabilisatorgehalt den Stabilisator Natriumhexametaphosphat im Bereich von 97 bis 99 % und den Stabilisator Carrageen im Bereich von 1 % bis 3 % umfasst, wobei die Stabilisatormengen Folgendes bewirken:
(a) eine verlängerte Lagerbeständigkeit von wenigstens 60 Tagen ohne Abscheidung der Milchfeststoffe,
(b) Milchfeststoffe, die nach dem Verdünnen mit Wasser nicht abscheiden, und
(c) nach dem Verdünnen mit Wasser ein trinkfähiges Produkt, das die Eigenschaften und den Geschmack von normaler frischer Milch hat,
und wobei der Stabilisatorgehalt durch Solubilisieren der Stabilisatoren Natriumhexametaphosphat und Carrageen in Wasser unter hohen Scherbedingungen erreicht wird.

2. UHT-Milchkonzentrat nach Anspruch 1, das mit Wasser in einem Wasser/Konzentrat-Verhältnis von 3:1 bis 4:1 verdünnt wird.

3. UHT-Milchkonzentrat nach einem der vorherigen Ansprüche, wobei die genannte Beständigkeit durch keimfreies Verpacken des genannten Konzentrats zur Lagerung erreicht wird.

4. UHT-Milchkonzentrat nach Anspruch 3, wobei die genannte Beständigkeit eine Dauer von mehr als 90 Tagen umfasst.

5. UHT-Milchkonzentrat nach einem der vorherigen Ansprüche mit einem pH-Wert im Bereich von 6 bis 8.

6. UHT-Milchkonzentrat nach einem der vorherigen Ansprüche, wobei der genannte Gehalt an fettfreien Milchfeststoffen (MSNF) 35 bis 46 Gew.-% beträgt.

7. UHT-Milchkonzentrat nach einem der vorherigen Ansprüche, wobei der genannte Gehalt an fettfreien Milchfeststoffen (MSNF) eine solche Menge umfasst, dass ein trinkfähiges Produkt mit einem MSNF von wenigstens 8,25 Gew.-% produziert wird.

8. UHT-Milchkonzentrat nach einem der vorherigen Ansprüche, wobei der genannte Gehalt an fettfreien Milchfeststoffen (MSNF) 35 bis 45 Gew.-% beträgt und das genannte Konzentrat einen Milchfettgehalt von weniger als 0,74 bis 11,77 Gew.-% hat.

9. UHT-Milchkonzentrat nach einem der vorherigen Ansprüche, wobei das genannte UHT-Milchkonzentrat kondensierte, entrahmte Milch mit einem Gehalt an fettfreien Milchfeststoffen von 35 bis 45 Gew.-%, wobei die genannte entrahmte Milch im Bereich von 87 bis 90 Gew.-% liegt, und einen Rahmgehalt im Bereich von bis zu 8,5 bis 10,5 Gew.-% umfasst.

10. Verpackung eines ultrahocherhitzten pasteurisierten, flüssigen (UHT)-Milchkonzentrats zum Mischen mit Wasser, um ein rekonstituiertes Milchgetränk bereitzustellen, das wie frische Milch schmeckt, die einen Behälter, der ein ultrahocherhitztes pasteurisiertes, flüssiges (UHT)-Milchkonzentrat nach einem der vorherigen Ansprüche enthält, zum Liefern des UHT-Milchkonzentrats zum Mischen mit Wasser umfasst, um das trinkfähige Produkt zu bilden.

11. Verpackung nach Anspruch 10, wobei der genannte Milchkonzentratbehälter eine solche strukturelle Konfiguration hat, dass er in einen Flüssigkeitsspender mit einer Austrittsdüse zum Mischen des genannten ultrapasteurisierten Milchkonzentrats mit Wasser zum Ausgeben des genannten rekonstituierten, flüssigen Milchgetränks gegeben werden kann.

12. Verpackung nach Anspruch 10, wobei der genannte Behälter eine strukturelle Konfiguration hat, die für die Verwendung mit einem Spender geeignet ist, der einen Mischer zum Mischen des genannten ultrapasteurisierten Milchkonzentrats mit Wasser beinhaltet, um ein rekonstituiertes, flüssiges Milchgetränk zu bilden, das wie frische Milch schmeckt.

13. Verpackung nach einem der Ansprüche 10 bis 12, wobei der genannte Behälter für das genannte UHT-Milchkonzentrat ein Fassungsvermögen von bis zu 300 Gallonen (1135,62 1) für die Lagerung und den Versand hat.

14. Verpackung nach einem der Ansprüche 10 bis 12, wobei das Fassungsvermögen des genannten Behälters von einem Pint (0,473 1) bis zu einem Quart (1,137 1) zur Verdünnung mit Wasser in einem Volumenverhältnis von 3:1 bis 4:1 reicht, um das trinkfähige Produkt bereitzustellen.

15. Keimfreie Verpackung für ein ultrahocherhitztes, pasteurisiertes, flüssiges (UHT)-Milchkonzentrat zum Mischen mit Wasser, um ein rekonstituiertes Milchgetränk bereitzustellen, das wie frische Milch schmeckt, die einen Behälter, der unter keimfreien Bedingungen ein ultrahocherhitztes, pasteurisiertes, flüssiges (UHT)-Milchkonzentrat nach einem der Ansprüche 1 bis 9 enthält, zum Liefern des UHT-Milchkonzentrats zum Mischen mit Wasser umfasst, um das trinkfähige Produkt zu bilden.

16. Keimfreie Verpackung des UHT-Milchkonzentrats nach Anspruch 15 mit einer Düse, die so konfiguriert ist, dass das UHT-Milchkonzentrat in einem Wasser/Konzentrat-Verhältnis von 3:1 bis 4:1 ausgegeben wird.

17. Getränkespender zum Liefern eines ultrahocherhitzten pasteurisierten, flüssigen (UHT)-Milchkonzentrats und Mischen mit Wasser, um ein rekonstituiertes Milchgetränk bereitzustellen, das wie frische Milch schmeckt, umfassend einen Behälter, der ein ultrahocherhitztes pasteurisiertes, flüssiges (UHT)-Milchkonzentrat nach einem der Ansprüche 1 bis 9 enthält, zum Liefern des UHT-Milchkonzentrats zum Mischen mit Wasser, und einen Spender mit einer Wasserquelle und einem Mischer zum Mischen des Wassers mit dem UHT-Milchkonzentrat aus dem genannten Behälter, um das trinkfähige Produkt mit den Eigenschaften und dem Geschmack von normaler frischer Milch zu bilden und zu liefern.

18. Getränkeausgabevorrichtung nach Anspruch 17, wobei der genannte Mischer so konfiguriert ist, dass das UHT-Milchkonzentrat mit Wasser in einem Wasser/Konzentrat-Verhältnis von 3:1 bis 4:1 ausgegeben wird.

19. Verfahren zur Produktion eines ultrahocherhitzten pasteurisierten, flüssigen (UHT)-Milchkonzentrats zum Mischen mit Wasser, um ein rekonstituiertes Milchgetränk bereitzustellen, das wie frische Milch schmeckt, das die folgenden Schritte beinhaltet: Bereitstellen eines kondensierten, flüssigen Milchgemischs, das die Stabilisatoren Natriumhexametaphosphat und Carrageen und ein pasteurisiertes, flüssiges Milchkonzentrat enthält, das eine Menge an fettfreien Milchfeststoffen hat, die ausreicht, um das UHT-Milchkonzentrat mit einem Gehalt an fettfreien Milchfeststoffen von wenigstens 29,9 Gew.-% zu produzieren, wenn das genannte UHT-Milchkonzentrat mit Wasser rekonstituiert wird, wobei die genannten Stabilisatoren in wirksamen Mengen vorhanden sind, um eine stabile Dispersion der genannten Milchfeststoffe zu bilden, und Lenken eines kontinuierlichen Stroms des genannten stabilisierten, kondensierten, flüssigen Milchgemischs in direkten Kontakt mit Dampf, indem Dampf direkt in den genannten Strom des kondensierten, flüssigen Milchgemischs mit einer wirksamen ultrahohen, pasteurisierenden Temperatur über einen Zeitraum injiziert wird, der ausreicht, um das genannte UHT-Milchkonzentrat, das einen Gehalt an fettfreien Milchfeststoffen von wenigstens 29,9 Gew.-% hat, zu bilden, das
(a) eine verlängerte Lagerbeständigkeit von wenigstens 60 Tagen ohne Abscheidung der Milchfeststoffe,
(b) Milchfeststoffe, die nach dem Verdünnen mit Wasser nicht abscheiden, hat und
(c) nach dem Verdünnen ein trinkfähiges Produkt bereitstellt, das wie frische Milch schmeckt,
wobei der Schritt des Bereitstellens eines kondensierten, flüssigen Milchgemischs Folgendes beinhaltet:
Erhitzen eines flüssigen Milchausgangsprodukts unter Vakuum auf eine erhöhte Temperatur über einen Zeitraum, der ausreicht, um das Milchausgangsprodukt zu pasteurisieren und Flüssigkeit aus dem Milchausgangsprodukt zu verdampfen, um ein pasteurisiertes, flüssiges Milchkonzentrat zu bilden;
Herstellen eines Stabilisatorschlamms durch Solubilisieren der Stabilisatoren Natriumhexametaphosphat und Carrageen in Wasser unter hohen Scherbedingungen, wobei die genannten Stabilisatoren in einer Menge vorliegen, die ausreicht, um das genannte UHT-Milchkonzentrat mit einem Stabilisatorgehalt von weniger als 1 Gew.-% zu produzieren, wobei der Stabilisatorgehalt den Stabilisator Natriumhexametaphosphat im Bereich von 97 bis 99 % und den Stabilisator Carrageen im Bereich von 1 bis 3 % umfasst; und
Mischen des Stabilisatorschlamms mit dem pasteurisierten, füssigen Milchkonzentrat.

20. Verfahren nach Anspruch 19, wobei der Schritt des Bereitstellens eines kondensierten, flüssigen Milchgemischs Folgendes beinhaltet: Bereitstellen eines pasteurisierten flüssigen Milchkonzentrats mit einer Menge an fettfreien Milchfeststoffen, die ausreicht, um das genannte UHT-Milchkonzentrat mit einem Gehalt an fettfreien Milchfeststoffen von wenigstens 29,9 Gew.-% zu produzieren, wenn das genannte UHT-Milchkonzentrat mit Wasser rekonstituiert wird, Mischen einer ausreichenden Menge Rahm mit dem genannten pasteurisierten, flüssigen Milchkonzentrat, um ein kondensiertes, flüssiges Gemisch mit einem ausreichenden Fettgehalt zu erhalten, mit dem ein rekonstituiertes Milchgetränk mit einem Fettgehalt von weniger als 0,21 bis 3,25 Gew.-% des genannten Milchgetränks gebildet werden kann, wenn das genannte UHT-Milchkonzentrat mit Wasser rekonstituiert wird, und Mischen einer wirksamen Menge an Stabilisatoren mit dem genannten kondensierten, flüssigen Gemisch, um eine stabile Dispersion der genannten Milchfeststoffe und des Fetts in dem genannten kondensierten, flüssigen Gemisch zu bilden.

21. Verfahren nach Anspruch 19 oder Anspruch 20, wobei der genannte Schritt zum Lenken des kontinuierlichen Stroms das Erhitzen des genannten kondensierten, flüssigen Milchgemischs in direktem Kontakt mit dem genannten injizierten Dampf bei einer Temperatur im Bereich von 288°F (142,22°C) bis 294°F (145,56°C) über einen Zeitraum beinhaltet, der ausreicht, um das genannte UHT-Milchkonzentrat zu produzieren.

22. Verfahren nach Anspruch 19 oder Anspruch 20, wobei der genannte Schritt zum Lenken des kontinuierlichen Stroms zunächst das Erhitzen des genannten kondensierten, flüssigen Milchgemischs auf eine erste Temperatur von 180°F (82,22°C) über einen Zeitraum von 30 bis 36 Sekunden und dann das Lenken des erhitzten kondensierten, flüssigen Milchgemischs in direkten Kontakt mit dem genannten injizierten Dampf bei einer Temperatur von 290°F (143,33°C) bis 294°F (145,56°C) über einen Zeitraum von 2 bis 5 Sekunden beinhaltet, um das genannte UHT-Milchkonzentrat zu bilden.

23. Verfahren nach einem der Ansprüche 19 bis 22, wobei die Viskosität des kondensierten, flüssigen Milchgemischs im Bereich von 300 bis 400 Zentipoise (3-4 Pa) bei 40 bis 45°F (4,44 bis 7,22°C) und die Viskosität des UHT-Milchkonzentrats im Bereich von 1000 bis 1500 Zentipoise (10 bis 15 Pa) bei 40 bis 45°F (4,44 bis 7,22°C) liegt.

24. Verfahren nach einem der Ansprüche 20 bis 23, wobei die genannten Stabilisatoren einen vorgewählten pH-Wert des genannten kondensierten, flüssigen Milchgemischs im Bereich von 6 bis 8 aufrechterhalten können.

25. Verfahren nach einem der Ansprüche 19 bis 24, das ferner die Schritte des Homogenisierens des genannten UHT-Milchkonzentrats und dann des Verpackens des genannten homogenisierten UHT-Milchkonzentrats zum anschließenden Mischen mit Wasser beinhaltet, um das genannte rekonstituierte Milchgetränk zu bilden.

26. Verfahren nach Anspruch 25, wobei der genannte Verpackungsschritt den Schritt des Kühlens des genannten UHT-Milchkonzentrats und des Füllens des genannten UHT-Milchkonzentrats in einen Flüssiggetränkspender mit Verpackungsfüllmitteln beinhaltet.

27. Verfahren nach Anspruch 25, wobei der genannte Verpackungsschritt das Füllen des genannten UHT-Milchkonzentrats in eine Verpackung beinhaltet, die eine Austrittsdüse zum Mischen des genannten UHT-Milchkonzentrats mit Wasser hat, um das genannte rekonstituierte Milchgetränk zu bilden.

28. Verfahren nach Anspruch 25, wobei der genannte Verpackungsschritt den Schritt des Kühlens des genannten UHT-Milchkonzentrats auf eine Temperatur von 80°F (26,67°C) bis 90°F (32,22°C) und des Füllens des genannten Milchkonzentrats in einen keimfreien Behälter beinhaltet.

29. Verfahren nach Anspruch 25, wobei der genannte Verpackungsschritt das Füllen von bis zu 300 Gallonen (1135,62 1) des genannten UHT-Milchkonzentrats in einen keimfreien Behälter beinhaltet.

30. Verfahren nach Anspruch 25, wobei der genannte Verpackungsschritt das Füllen des genannten UHT-Milchkonzentrats in einen Behälter für eine anschließende Rekonstitution mit Wasser in einem Wasser/Milchkonzentrat-Mischvolumenverhältnis im Bereich von 3:1 bis 4:1 beinhaltet.

31. Verfahren nach einem der Ansprüche 19 bis 30, wobei das genannte kondensierte flüssige Milchgemisch eine ausreichende Menge an Rahm beinhaltet, um einen ausreichenden Fettgehalt bereitzustellen, um ein rekonstituiertes Milchgetränk mit einem Fettgehalt von weniger als 0,21 bis 3,25 Gew.-% des genannten Milchgetränks zu erzeugen, wenn das genannte UHT-Milchkonzentrat mit Wasser rekonstituiert wird.

32. Verfahren nach einem der Ansprüche 19 bis 31, wobei das genannte pasteurisierte, flüssige Milchkonzentrat fettfreie Milchfeststoffe in einer Menge von wenigstens 35 bis 46 Gew.-% beinhaltet.

33. Verfahren nach einem der Ansprüche 19 bis 31, wobei das genannte rekonstituierte Milchgetränk einen Milchfettgehalt im Bereich von weniger als 0,21 bis 3,25 Gew.-% und einen fettfreien Milchfeststoffgehalt von wenigstens 8,25 Gew.-% aufweist.

## Revendications

1. Concentré de lait liquide pasteurisé à ultra-haute température (UHT) destiné à être mélangé à de l'eau pour produire une boisson de lait reconstitué qui a le goût du lait frais comprenant un concentré de lait liquide pasteurisé à ultra-haute température (UHT) qui est produit en injectant directement de la vapeur dans un mélange de lait liquide condensé, ledit concentré comportant une quantité de matière sèche dégraissée du lait d'au moins 29,9 % en poids et une teneur en stabilisants de moins de 1% en poids, la teneur en stabilisants comprenant un stabilisant d'hexamétaphosphate de sodium dans la plage de 97 à 99 % et un stabilisant de carraghénine dans la plage de 1 % à 3 %, les quantités de stabilisants servant à donner :
(a) une stabilité de conservation prolongée d'au moins 60 jours sans séparation de la matière sèche du lait
(b) une matière sèche du lait qui ne se sépare pas à sa dilution avec l'eau, et
(c) à la dilution avec l'eau, un produit buvable qui a les caractéristiques et le goût du lait frais normal,
et dans lequel la teneur en stabilisants est préparée en solubilisant les stabilisants d'hexamétaphosphate de sodium et de carraghénine dans de l'eau dans des conditions de cisaillement élevé.

2. Concentré de lait UHT selon la revendication 1, lequel est dilué avec de l'eau dans un rapport d'eau/concentré de 3:1 à 4:1.

3. Concentré de lait UHT selon l'une quelconque des revendications précédentes, dans lequel ladite stabilité est obtenue par conditionnement aseptique dudit concentré pour son stockage.

4. Concentré de lait UHT selon la revendication 3, dans lequel ladite stabilité est prévue pour une durée de plus de 90 jours.

5. Concentré de lait UHT selon l'une quelconque des revendications précédentes, ayant un PH dans la plage de 6 à 8.

6. Concentré de lait UHT selon l'une quelconque des revendications précédentes, dans lequel ladite teneur en matière sèche dégraissée du lait (MSNF) est de 35% à 46 % en poids.

7. Concentré de lait UHT selon l'une quelconque des revendications précédentes, dans lequel ladite teneur en matière sèche dégraissée du lait (MSNF) est d'une quantité servant à produire un produit buvable ayant une MSNF d'au moins 8,25 % en poids.

8. Concentré de lait UHT selon l'une quelconque des revendications précédentes, dans lequel ladite teneur en matière sèche dégraissée du lait (MSNF) est de 35 % à 45 % en poids et ledit concentré à une teneur en matière graisse du lait d'au moins 0,74 % à 11,77 % en poids.

9. Concentré de lait UHT selon l'une quelconque des revendications précédentes, ledit concentré de lait UHT comportant un lait écrémé condensé comportant une matière sèche dégraissée du lait de 35 % à 45 % en poids, ledit lait écrémé étant compris dans la plage de 87 % à 90 % en poids, et une teneur de crème comprise dans la plage jusqu'à 8,5 % à 10,5 % en poids.

10. Conditionnement d'un concentré de lait liquide pasteurisé à ultra-haute température (UHT) destiné à être mélangé à de l'eau pour produire une boisson de lait reconstitué qui a le goût du lait frais comprenant un contenant qui contient un concentré de lait liquide pasteurisé à ultra-haute température (UHT) selon l'une quelconque des revendications précédentes, ledit contenant servant à distribuer le concentré de lait UHT en vue de son mélange à de l'eau pour former le produit buvable.

11. Conditionnement selon la revendication 10, dans lequel ledit contenant de concentré de lait a une configuration structurelle pouvant être efficacement disposée dans un distributeur de liquide comportant une buse de décharge pour mélanger ledit concentré de lait ultrapasteurisé à de l'eau et distribuer ladite boisson de lait liquide reconstitué.

12. Conditionnement selon la revendication 10, dans lequel ledit contenant a une configuration structurelle pouvant être efficacement utilisée avec un distributeur qui comporte un mélangeur pour mélanger ledit concentré de lait ultrapasteurisé à de l'eau en vue de former une boisson de lait liquide reconstitué qui a le goût du lait frais.

13. Conditionnement selon l'une quelconque des revendications 10 à 12, dans lequel ledit contenant dudit concentré de lait UHT a une capacité de jusqu'à 1135,62 l (300 gallons) pour le stockage et le transport.

14. Conditionnement selon l'une quelconque des revendications 10 à 12, dans lequel la capacité dudit contenant va de 0,173 l (une pinte) à 1,137 l (un "quart") destiné à être dilué à de l'eau à des rapports volumiques de 3:1 à 4:1 pour produire le produit buvable.

15. Conditionnement aseptique d'un concentré de lait liquide pasteurisé à ultra-haute température (UHT) destiné à être mélangé à de l'eau pour produire une boisson de lait reconstitué qui a le goût du lait frais comprenant un contenant qui contient dans des conditions aseptiques un concentré de lait liquide pasteurisé à ultra-haute température (UHT) selon l'une quelconque des revendications 1 à 9, ledit contenant servant à distribuer le concentré de lait UHT en vue de son mélange à de l'eau pour former le produit buvable.

16. Conditionnement aseptique du concentré de lait UHT selon la revendication 15, ayant une buse configurée pour distribuer le concentré de lait UHT avec de l'eau à un rapport eau/concentré de 3:1 à 4:1.

17. Distributeur de boisson pour la distribution d'un concentré de lait liquide pasteurisé à ultra-haute température (UHT) destiné à être mélangé à de l'eau pour produire une boisson de lait reconstitué qui a le goût du lait frais comprenant un contenant qui contient un concentré de lait liquide pasteurisé à ultra-haute température (UHT) selon l'une quelconque des revendications 1 à 9, ledit contenant servant à distribuer le concentré de lait UHT en vue de son mélange à de l'eau, et un distributeur ayant une source d'eau et un mélangeur pour mélanger l'eau au concentré de lait UHT provenant dudit contenant en vue de former et de distribuer le produit buvable qui a les caractéristiques et le goût du lait frais normal.

18. Distributeur de boisson selon la revendication 17, dans lequel ledit mélangeur est configuré pour distribuer le concentré de lait UHT avec l'eau à un rapport eau/concentré de 3:1 à 4:1.

19. Procédé de production d'un concentré de lait liquide pasteurisé à ultra-haute température (UHT) destiné à être mélangé à dé l'eau pour produire une boisson de lait reconstitué qui a le goût du lait frais comprenant la fourniture d'un mélange de lait liquide condensé contenant des stabilisants d'hexamétaphosphate de sodium et de carraghénine et un concentré de lait liquide pasteurisé ayant une quantité de matière sèche dégraissée du lait suffisante pour produire le concentré de lait UHT ayant une teneur en matière sèche dégraissée du lait d'au moins 29,9 % en poids quand ledit concentré de lait UHT est reconstitué avec de l'eau, lesdits stabilisants étant présents dans des quantités efficaces pour former une dispersion stable de ladite matière sèche du lait, et aiguiller un flux continu dudit mélange de lait liquide condensé stabilisé pour le mettre en contact direct avec de la vapeur en injectant de la vapeur directement dans ledit flux de mélange de lait liquide condensé à une température de pasteurisation ultra-élevée efficace pendant un temps suffisant pour former ledit concentré de lait UHT ayant une teneur en matière sèche dégraissée du lait d'au moins 29, 9 % en poids avec
(a) une stabilité de conservation prolongée d'au moins 60 jours sans séparation de la matière sèche du lait
(b) une matière sèche du lait qui ne se sépare pas à sa dilution avec l'eau, et
(c) à la dilution, la production d'un produit buvable qui a le goût du lait frais,
dans lequel l'étape de fourniture d'un mélange de lait liquide condensé comprend :
le chauffage sous vide d'un produit précurseur du lait liquide à une température élevée pendant une quantité de temps suffisante pour pasteuriser le produit précurseur du lait et évaporer le liquide du produit précurseur du lait afin de former un concentré de lait liquide pasteurisé ;
la préparation d'une bouillie de stabilisants en solubilisant des stabilisants d'hexamétaphosphate de sodium et de carraghénine dans de l'eau dans des conditions de cisaillement élevé, lesdits stabilisants étant présents en une quantité suffisante pour produire ledit concentré de lait UHT d'une teneur en stabilisants de moins de 1 % en poids, la teneur en stabilisants comprenant un stabilisant d'hexamétaphosphate de sodium dans la plage de 97 à 99 % et un stabilisant de carraghénine dans la plage de 1 % à 3 % ; et
le mélange de la bouillie de stabilisants avec le concentré de lait liquide pasteurisé.

20. Procédé selon la revendication 19, dans lequel l'étape de fourniture d'un mélange de lait liquide condensé comprend la fourniture d'un concentré de lait liquide pasteurisé ayant une teneur en matière sèche dégraissée du lait suffisante pour produire ledit concentré de lait UHT d'une teneur en matière sèche dégraissée du lait d'au moins 29,9 % en poids quand ledit concentré de lait UHT est reconstitué avec de l'eau, le mélange d'une quantité suffisante de crème avec ledit concentré de lait liquide pasteurisé pour fournir un mélange liquide condensé ayant une quantité suffisante de matière grasse pour former une boisson de lait reconstitué d'une teneur en matière graisse allant de moins de 0,21 % jusqu'à 3,25 % en poids de ladite boisson de lait quand ledit concentré de lait UHT est reconstitué avec de l'eau, et le mélange d'une quantité efficace de stabilisants avec ledit mélange liquide condensé pour former une dispersion stable de ladite matière sèche du lait et de la matière grasse dans ledit mélange liquide condensé.

21. Procédé selon la revendication 19 ou la revendication 20, dans lequel ladite étape d'aiguillage du flux continu comporte le chauffage dudit mélange de lait liquide condensé en contact direct avec ladite vapeur injectée à une température comprise dans la plage de 144,22 °C (288 °F) à 145,56 °C (294 °F) pendant une période de temps suffisante afin de produire ledit concentré de lait UHT.

22. Procédé selon la revendication 19 ou la revendication 20, dans lequel ladite étape d'aiguillage du flux continu comporte tout d'abord le chauffage dudit mélange de lait liquide condensé à une première température de 82,22 °C (180 °F) pendant une période de 30 à 36 secondes, puis l'aiguillage du mélange de lait liquide condensé chauffé pour le mettre en contact direct avec ladite vapeur injectée à une température comprise dans la plage de 143,33 °C (290 °F) à 145,56 °C (294 °F) pendant une période de 2 à 5 secondes afin de former ledit concentré de lait UHT.

23. Procédé selon l'une quelconque des revendications 19 à 22, dans lequel la viscosité du mélange de lait liquide condensé est comprise dans la plage de 3 à 4 Pa (300 à 400 centipoises) à 4,44 à 7,22 °C (40 ° à 45 °F), et la viscosité du concentré de lait UHT est comprise dans la plage de 10 à 15 Pa (1000 à 1500 centipoises) à 4,44 à 7,22 °C (40 ° à 45 °F).

24. Procédé selon l'une quelconque des revendications 20 à 23, dans lequel lesdits stabilisants servent à maintenir un pH présélectionné dudit mélange de lait liquide condensé dans la plage de 6 à 8.

25. Procédé selon l'une quelconque des revendications 19 à 24, comportant en outre les étapes d'homogénéisation dudit concentré de lait UHT, puis le conditionnement dudit concentré de lait UHT homogénéisé en vue de son mélange ultérieur à de l'eau pour former ladite boisson de lait reconstitué.

26. Procédé selon la revendication 25, dans lequel ladite étape de conditionnement comporte l'étape de refroidissement dudit concentré de lait UHT et la disposition dudit concentré de lait UHT dans un distributeur de boisson liquide avec un moyen de remplissage de conditionnement.

27. Procédé selon la revendication 25, dans lequel ladite étape de conditionnement comporte la disposition dudit concentré de lait UHT dans un conditionnement ayant une buse de décharge pour mélanger ledit concentré de lait UHT à de l'eau pour former ladite boisson de lait reconstitué.

28. Procédé selon la revendication 25, dans lequel ladite étape de conditionnement comporte l'étape de refroidissement dudit concentré de lait UHT à une température de 26,67 °C (80 °F) à 32,22 °C (90°F) et la disposition dudit concentré de lait dans un contenant aseptique.

29. Procédé selon la revendication 25, dans lequel ladite étape de conditionnement comporte la disposition de jusqu'à 1135,62 l (300 gallons) dudit concentré de lait UHT dans un contenant aseptique.

30. Procédé selon la revendication 25, dans lequel ladite étape de conditionnement comporte la disposition dudit concentré de lait UHT dans un contenant en vue de sa reconstitution ultérieure avec de l'eau dans un rapport volumique de mélange de concentré de lait compris dans la plage de 3:1 à 4:1.

31. Procédé selon l'une quelconque des revendications 19 à 30, dans lequel ledit mélange de lait liquide condensé comporte une quantité suffisante de crème pour produire une quantité suffisante de teneur en matière grasse efficace pour former une boisson de lait reconstitué ayant une teneur en matière grasse de moins de 0,21 % jusqu'à 3,25 % en poids de ladite boisson de lait quand ledit concentré de lait UHT est reconstitué avec de l'eau.

32. Procédé selon l'une quelconque des revendications 19 à 31, dans lequel ledit concentré de lait liquide pasteurisé comporte une teneur en matière sèche dégraissée du lait dans une quantité d'au moins 35 % à 46 % en poids.

33. Procédé selon l'une quelconque des revendications 19 à 31, dans lequel ladite boisson de lait reconstituée comporte une teneur en matière grasse du lait comprise dans la plage de moins de 0,21 % jusqu'à 3,25 % en poids et une teneur en matière sèche dégraissée du lait d'au moins 8,25 % en poids.
